# EUROPÄISCHE PATENTSCHRIFT

(11) **EP 1 657 483 B1**
(45) Veröffentlichungstag und Bekanntmachung des Hinweises auf die Patenterteilung: **01.04.2009**
(21) Anmeldenummer: 05023637.1
(22) Anmeldetag: 28.10.2005
(51) Int. Cl.: F16L 55/165

(54) **Verfahren und Vorrichtung zur Sanierung oder zur Optimierung der Effizienz eines Fernwärmeleitungssystems**
Method and device for repairing or optimizing the efficiency of a long-distance heating network
Procédé et dispositif de rénovation ou d'optimisation de l'efficacité d'un réseau de distribution de chaleur

(30) Priorität: 12.11.2004 DE 102004054693
(43) Veröffentlichungstag der Anmeldung: 17.05.2006
(73) Patentinhaber: MVV Energie AG, 68159 Mannheim (DE)
(72) Erfinder: Hoffmann, Heinz-Werner, 68549 Ilvesheim (DE); Göhler, Torsten, 68219 Mannheim (DE); Knapp, Wolfgang, 68519 Viernheim (DE)
(74) Vertreter: Kesselhut, Wolf

(56) Entgegenhaltungen:
- DE-A1- 3 934 255
- DE-C1- 19 608 352
- DE-U1- 9 101 034
- US-A- 4 702 645

## Beschreibung

Die Erfindung betrifft ein Verfahren und eine Vorrichtung zur Sanierung und/oder zur Optimierung der Effizienz eines Fernwärmeleitungssystems durch das Einbringen eines Innenrohrleitungsstranges in einen Leitungsabschnitt des Fernwärmeleitungssystems.

Aufgrund von Energiesparmaßnahmen bei den Endverbrauchern sowie zu optimistischen Prognosen bei der Berechnung des Fernwärmebedarfs sind Leitungsabschnitte von Fernwärmeleitungssystemen, die insbesondere aus oberirdisch und/oder erdverlegten Rohrleitungen mit einem Mediumrohr, einer Isolationsschicht und einem Feuchtigkeitsschutz sowie mechanischem Schutz für die Isolationsschicht bestehen, oft überdimensioniert. Eine Folge hieraus sind hohe Wärmeverluste, da einerseits die wärmeabstrahlende Oberfläche des Leitungsabschnittes größer als erforderlich ist und andererseits die Netzfahrweise und Netzregelung nicht optimal erfolgen kann.

Weiterhin kann die auf mindestens 40 Jahre angesetzte Lebensdauer von Fernwärmeleitungen durch Innen- und/oder Außenkorrosion reduziert sein. Hierbei zählen ungünstige örtliche Randbedingungen und/oder Qualitätsmängel bei der Bauausführung zu den häufigsten Ursachen für eine Außenkorrosion, währenddessen Innenkorrosion ausschließlich durch eine mangelhafte Qualität des Heizwassers infolge ungenügender Aufbereitung hervorgerufen wird. Durch eine Innen- und/oder Außenkorrosion des Mediumrohres werden in der Regel Leckagen hervorgerufen, die zu Wasserverlusten und damit zu einer Durchfeuchtung der Isolationsschicht führen, wodurch einerseits zusätzliche Wärmeverluste und andererseits neue Korrosionsschäden entstehen können.

Es gibt unterschiedliche Sanierungsverfahren zur Beseitigung von durch Innen- und/oder Außenkorrosion hervorgerufene Schäden.

Eine Sanierung von beschädigten Fernwärmeleitungsabschnitten ist bei einer sowohl innerhalb als auch außerhalb der Leitung auftretender Schädigung sehr aufwendig, da für die Innen- und für die Außensanierung unterschiedliche Verfahren angewendet werden müssen. Die Innensanierung kann hierbei durch Einbringen einer Zementmörtelauskleidung erfolgen, wobei jedoch die erhöhten Anforderungen an den Zementmörtel durch die systembedingten Temperatureinflüsse berücksichtigt werden müssen. Um eine gute Haftung des Zementmörtels an der Leitungsinnenwand zu erzielen, muss der Leitungsabschnitt jedoch vor dem Einbringen einer Zementmörtelauskleidung mechanisch von Innen gereinigt und vorbehandelt werden.

Bei der Außensanierung eines in einem Haubenkanal verlegten Leitungsabschnittes wird hingegen nach der Entfernung der bestehenden Isolierung ein Gemisch aus heißem Bitumen mit Korkbeimischungen als Isolierwerkstoff in den Hohlraum zwischen dem das Heizwasser führenden Mediumrohr und der Kanalwand eingegossen, wo es nach Auskühlung aushärtet.

Eine alleinige Innen- oder Außensanierung ist hierbei kostengünstiger als eine Neuverlegung, jedoch bleibt der vor der Sanierung vorhandene Leitungsquerschnitt unverändert bestehen.

Eine gleichzeitige Außen- und Innensanierung eines Leitungsabschnittes mit den genannten Verfahren ist zwar möglich, ist jedoch auch erheblich kostenaufwendiger als eine Neuverlegung. Weiterhin bleibt der Leitungsquerschnitt bei Anwendung dieser Sanierungsverfahren unverändert, so dass eine Verkleinerung und somit Anpassung des Querschnitts der Fernwärmeleitung an die bestehende Durchflussmenge an Heizwasser durch die Sanierung nicht erfolgt.

In diesem Zusammenhang ist aus der DE 196 08 352 ein Inliner-Strang bekannt, der zur Sanierung und Optimierung eines Leitungsabschnitts in einen solchen eingezogen wird. Zur Kompensation temperaturbedingter Dehnungen besteht der Inliner-Strang hierbei aus einem selbstkompensierenden gewellten Metallrohr, welches zum Schutz vor einer Schädigung durch Reibung und Kontaktkorrosion von einem elektrisch isolierenden Faserstoff umhüllt ist. Der Inliner-Strang stützt sich hierbei über Gleitlager an der Innenwand des zu sanierenden Leitungsabschnitts ab, wobei die Gleitlager an Halbschalen angeordnet sind, die den Außenumfang des Inliner-Stranges umschließen. Da das gewellte Metallrohr nur ein Bruchteil der temperaturbedingten Dehnungen ausgleichen kann und die verbleibende Restdehnung von den Kompensatoren des zu sanierenden Leitungsabschnitt aufgenommen werden muss, sind zur Übertragung der Restdehnungen vom Inliner-Strang auf den zu sanierenden Leitungsabschnitt Zwischenfestpunkte in dem Leitungsabschnitt vorgesehen.

Um aufgrund der Flexibilität des Metallrohres eine zu große Durchbiegung des Inliner-Stranges zwischen den Lager- bzw. Festpunkten zu vermeiden, muss der Außendurchmesser des gewellten Metallrohres auf den Innendurchmesser des zu sanierenden und optimierenden Leitungsabschnittes abgestimmt sein. Da jedoch gewellte Metallrohre nur bis zu einem Nenndurchmesser von 150 cm in wirtschaftlicher Weise herstellbar sind, ist ein aus gewellten Metallrohren gebildeter Inliner-Strang nur in begrenztem Umfang zur Sanierung und netzhydraulischen Optimierung von Leitungsabschnitten mit großen Innendurchmessern einsetzbar. Darüber hinaus ist durch die sich in das Innere des Metallrohres hinein erstreckende Wellung der Strömungswiderstand des gewellten Metallrohres erhöht, so dass der Betrieb eines solchen Leitungsabschnittes zusätzliche Betriebskosten durch erhöhten Pumpstromaufwand erfordert.

Demgemäß ist es eine Aufgabe der vorliegenden Erfindung, ein Verfahren und eine Vorrichtung zu schaffen, die eine wirtschaftliche Sanierung eines bestehenden Fernwärmeleitungsabschnittes in flexibler Weise ermöglichen und mit denen die Wärmeverluste nach der Sanierung des Leitungssystems verringert werden.

Diese Aufgabe wird gemäß der Erfindung durch die Merkmale von Anspruch 1 und 7 gelöst.

Weitere Merkmale der Erfindung sind in den Unteransprüchen enthalten.

Gemäß der Erfindung dient das Verfahren zur Sanierung und/oder zur Optimierung der Effizienz eines Fernwärmeleitungssystems mit wenigstens einem Leitungsabschnitt, wobei das Verfahren neben dem Eröffnen eines zu sanierenden und/oder zu optimierenden Leitungsabschnittes zwei weitere Verfahrensschritte umfasst.

Nach dem Eröffnen des Leitungsabschnittes, welcher insbesondere aus einer Ummantelung oder einem Mantelrohr, einem Innenrohr - auch Mediumrohr genannt - und einer dazwischen liegenden Isolationsschicht besteht, werden in einem zweiten Verfahrensschritt thermisch isolierte eigensteife Innenrohrelemente kleineren Durchmessers mit daran angeordneten Lagern miteinander verbunden und der so entstandene Innenrohrleitungsstrang in den zu sanierenden und/oder zu optimierenden Leitungsabschnitt eingebracht. In einem dritten darauf folgenden Verfahrensschritt werden die Enden des Innenrohrleitungsstranges gegenüber dem zu sanierenden und/oder zu optimierenden Leitungsabschnitt in der Art abgedichtet, dass das zwischen dem Innenrohrleitungsstrang und der Innenwand des zu sanierenden und/oder zu optimierenden Leitungsabschnittes sich bildende Luftvolumen gegenüber der Umgebungsluft im Wesentlichen abgeschlossen ist.

Hierdurch ergibt sich der Vorteil, dass zum einen der zu sanierende und/oder zu optimierende Leitungsabschnitt trotz eventuell bereits bestehender Beschädigungen weiter zur Führung und Lagerung des darin eingebrachten Innenrohrleitungsstranges verwendet werden kann und zum anderen durch eine Anpassung der Querschnittsfläche des Innenrohrleitungsstranges an den tatsächlichen Wärmebedarf die Netzhydraulik verbessert wird, so dass Wärmeverluste durch die verringerte Abstrahlungsoberfläche vermindert werden. Hierdurch ergibt sich der Vorteil, dass das erfindungsgemäße Verfahren kostengünstiger als die bisher bekannten Verfahren ist.

Hinzu kommt, dass in vorteilhafter Weise der nach diesem Verfahren sanierte bzw. optimierte Leitungsabschnitt mit einer mehrfachen thermischen Isolation versehen ist, da neben der schon bestehenden Isolationsschicht des zu sanierenden bzw. zu optimierenden Leitungsabschnittes, die im Wesentlichen stehende Luftschicht zwischen dem Innenrohrleitungsstrang und der Innenwand des zu sanierenden bzw. zu optimierenden Leitungsabschnittes und die thermische Isolation des Innenrohrleitungsstranges, die vorzugsweise aus einer das Mediumrohr umhüllenden Isolationsschicht besteht, zur thermischen Isolation des Leitungsabschnittes beitragen.

In einer weiteren Ausführungsform der Erfindung kann es zudem vorgesehen sein, dass in einem Abstand von beispielsweise 10 m in Richtung des Innenrohrleitungsstranges Feuchtigkeitssensoren in der Isolationsschicht des Innenrohrleitungsstranges und/oder außerhalb der Schutzverkleidung desselben angeordnet sind, die in vorteilhafter Weise eine Leckage des Innenrohrleitungsstranges oder sich innerhalb des Leitungsabschnitts ansammelndes Leck- oder Kondenswasser auf einer den Feuchtigkeitssensoren zugeordneten Anzeigevorrichtung anzeigen.

Neben einer Kostenersparnis aufgrund der Weiternutzung eines bestehenden Fernwärmeleitungsnetzes anstelle einer aufwendigen Neuverlegung, kann bei Anwendung des erfindungsgemäßen Verfahrens auch die Netzhydraulik durch die entsprechende Auswahl des Querschnitts des Innenrohrleitungsstranges in vorteilhafter Weise an den tatsächlichen Bedarf an Heizwasser für die Fernwärme angepasst werden, wobei aufgrund der Eigensteifigkeit der Innenrohrelemente auch hohe Leitungsdrücke möglich sind. Weiterhin ist in vorteilhafter Weise nach einer Sanierung und/oder Optimierung des Fernwärmeleitungssystems, beispielsweise bei einer weiteren Veränderung des Heizwasserbedarfs, der eingebrachte Innenrohrleitungsstrang auf einfache Weise gegen einen Innenrohrleitungsstrang anderen Durchmessers austauschbar, wobei die Leitungsabschnitte des bestehenden Fernwärmeleitungsnetzes weiterhin zur Führung und Lagerung eines neu einzubringenden Innenrohrleitungsstranges genutzt werden können.

Das statische System des schon bestehenden Leitungsabschnittes muss hierbei nach der Sanierung bzw. Optimierung nicht verändert werden, da der eingebrachte Innenrohrleitungsstrang zusammen mit dem durchgeführten Heizwasser keine größeren Auflagerkräfte zur Folge hat. Hierbei hat es sich als vorteilhaft herausgestellt, die Lager des Innenrohrleitungsstranges auf Höhe von gegebenenfalls bereits vorhandenen Auflagern des bestehenden Leitungsabschnittes anzuordnen.

Das Einbringen des Innenrohrleitungsstranges erfolgt vorzugsweise durch Einschieben in den bestehenden Leitungsabschnitt, wobei in vorteilhafter Weise die Lager zur Lagerung der Innenrohrelemente als Gleitlager oder -kufen, insbesondere aus einem Material mit einem niedrigen Reibungskoeffizienten, ausgestaltet sind, welche eine einfache Verschiebbarkeit und/oder Verdrehbarkeit des Innenrohrleitungsstranges relativ zum Leitungsabschnitt erlauben. Wie die Anmelderin gefunden hat, hat sich für eine einfache Verschiebbarkeit und/oder Verdrehbarkeit die Anordnung von vier in einem Winkel von 90° zueinander angeordneten Gleitlagern und/oder -kufen im Querschnitt des Innenrohrleitungsstranges als besonders vorteilhaft herausgestellt. Die Innenrohrelemente stützen sich hierbei an der Innenwand des Leitungsabschnittes über die Lager ab und positionieren den Innenrohrleitungsstrang konzentrisch im Leitungsabschnitt. Hierdurch ergibt sich der Vorteil, dass der Abstand zwischen der Außenseite des Innenrohrleitungsstranges und der Innenwand des Leitungsabschnittes in radialer Richtung gleich groß ist, so dass die miteinander verbundenen Innenrohrelemente zwangfrei eingebracht und positioniert werden können.

Gemäß der Erfindung werden zur Herstellung eines Innenrohrleitungsstranges die Innenrohrelemente im Taktverfahren nacheinander in den geöffneten Leitungsabschnitt eingebracht, wobei die einzelnen Innenrohrelemente insbesondere durch Verschweißen der Mediumrohre miteinander verbunden und auf den Lagern abgestützt in den Leitungsabschnitt eingeschoben werden. Alternativ zu einer Verbindung mit einer Schweißnaht ist es aber auch möglich, die Rohrelemente über andere Verbindungsmittel miteinander zu verbinden. Hierdurch ergibt sich der Vorteil, dass die Länge der Innenrohrelemente den örtlichen Gegebenheiten angepasst werden kann, die Verbindung der Rohrelemente an leicht zugänglichen Stellen erfolgt und so ein zügiges Einbringen des Innenrohrleitungsstranges in den Leitungsabschnitt ermöglicht wird.

Der Innenrohrleitungsstrang ist hierbei in vorteilhafter Weise über eine Länge von 100 bis 200 m in den Leitungsabschnitt einschiebbar, so dass das Fernwärmeleitungssystem nur an wenigen Punkten zur Einbringung eines Innenrohrleitungsstranges eröffnet werden muss. Hierdurch werden insbesondere bei erdverlegten Rohrleitungen aufwendige Tiefbaumaßnahmen bei der Sanierung bzw. Optimierung des Fernwärmeleitungssystems vermieden, da zum Eröffnen des Leitungsabschnitts lediglich Gruben mit einer Länge von 10 bis 12m erforderlich sind.

Die Dichtung zwischen dem Ende des Innenrohrleitungsstranges und dem sanierten bzw. optimierten Leitungsabschnitt ist vorzugsweise als eine längenveränderliche Dichtung ausgestaltet, welche eine Relativbewegung des Innenrohrleitungsstranges gegenüber dem Leitungsabschnitt erlaubt, so dass unterschiedliche Wärmedehnungen infolge unterschiedlicher Temperaturen des Innenrohrleitungsstranges und des bestehenden Leitungsabschnittes oder eine Setzung der Auflager nicht zu einer Schädigung der Dichtung führen.

Bei einer möglichen Leckage des Innenrohrleitungsstranges ist die Betriebssicherheit eines erfindungsgemäß sanierten bzw. optimierten Leitungsabschnittes weiterhin in der Art verbessert, dass aus der Leckage austretendes Heizwasser sich in dem schon bestehenden Leitungsabschnitt sammelt und von dort gezielt abgeführt werden kann. Erfindungsgemäß ist hierzu am Ende des Leitungsabschnittes, vorzugsweise in der dort angeordneten Dichtung, ein Ventil und/oder Ablauf zum Abführen von austretendem Heizwasser oder sich bildendem Kondenswasser angeordnet. Um beim Auftreten von Wasser zwischen der Innenwand des Leitungsabschnittes und dem Innenrohrleitungsstrang eine Durchnässung der Isolationsschicht des Innenrohrleitungsstranges zu verhindern, ist diese von einer Schutzverkleidung, vorzugsweise einer Ummantelung aus PE, umgeben, welche die Isolationsschicht wasserdicht nach außen hin abschließt und weiterhin vor mechanischer Beschädigung schützt.

Um den Innenrohrleitungsstrang einzubringen, wird der zu sanierende bzw. zu optimierende Leitungsabschnitt vorzugsweise in einem Bereich einer Richtungsänderung der Trassenführung oder von Hausabgängen des Fernwärmeleitungssystems geöffnet. Hierdurch ergibt sich der Vorteil, dass einerseits das Fernwärmeleitungssystem nur an wenigen Stellen zum Einbringen des Innenrohrleitungsstranges geöffnet werden muss und andererseits genug Platz vorhanden ist, um ausreichend lange Innenrohrelemente in den zu sanierenden bzw. zu optimierenden Leitungsabschnitt einzubringen.

Ein erfindungsgemäßer Innenrohrleitungsstrang zum Einbringen in einen zu sanierenden Leitungsabschnitt weist wenigstens ein erstes und zweites Innenrohrelement auf, die ein vorzugsweise glattwandiges Mediumrohr und eine das Mediumrohr umhüllende Isolationsschicht, die insbesondere aus einem PUR-Hartschaum besteht, umfassen. Zur Abstützung des Innenrohrleitungsstranges an der Innenwand eines zu sanierenden oder zu optimierenden Leitungsabschnitts sind an der Außenseite des Innenrohrleitungsstranges Lager angeordnet. Gemäß der Erfindung umgreift hierbei ein erstes und ein zweites halbringförmiges Stützelement das Mediumrohr des ersten und zweiten Innenrohrelementes zumindest abschnittsweise, wobei die Lager an der Außenseite der halbringförmigen Stützelemente befestigbar sind. Da die Innenrohrelemente vorzugsweise in dem Bereich ihrer Enden von der umhüllenden Isolationsschicht befreit sind, stützen die halbringförmigen Stützelemente das Mediumrohr der Innenrohrelemente unmittelbar ab und leiten die vom Mediumrohr aufgenommenen Lagerkräfte über das daran befestigbare Lager zur Innenwand des Leitungsabschnitts hin ab.

Die Lager bzw. die Bestandteile der Lager sind vorzugsweise aus einem Material, insbesondere aus einem Kunststoffmaterial, gebildet, welches zur Vermeidung von Wärmebrücken einen niedrigen Wärmeleitkoeffizienten aufweist.

Infolge der direkten Ableitung der Auflagerkräfte von dem Mediumrohr des Innenrohrelementes auf die das Mediumrohr umgreifenden halbringförmigen Stützelemente ergibt sich der Vorteil, dass an das Material der Isolationsschicht und/oder einer die Isolationsschicht umgebenden Schutzverkleidung keine hohen mechanischen Anforderungen zu stellen sind, so dass die Ummantelung trotz der hohen Temperaturen im Zwischenraum zwischen Innenrohrleitungsstrang und dem bestehenden Leitungsabschnitt beispielsweise als eine kostengünstige Ummantelung aus PE ausgebildet sein kann.

Aufgrund der Eigensteifigkeit der Innenrohrelemente kann in vorteilhafter Weise der Abstand der Lager in Längsrichtung des Innenleitungsstranges relativ groß gewählt werden, da die Durchbiegung der Innenrohrelemente beim Betrieb des Fernwärmeleitungsnetzes nur gering ist.

Gemäß der Erfindung weisen die halbringförmigen Stützelemente einen Innendurchmesser auf, der geringfügig größer als der Außendurchmesser der Mediumrohre ist, wodurch in vorteilhafter Weise eine größere Toleranz in Bezug auf den Außendurchmesser der Mediumrohre erreicht wird.

Eine sich um den Außenumfang des Innenrohrleitungsstranges erstreckende vorzugsweise schalenförmige Ummantelung umschließt gemäß einer vorteilhaften Ausführungsform der Erfindung die halbringförmigen Stützelemente vollständig und die Isolationsschicht der Innenrohrelemente im Bereich ihrer Enden abschnittsweise, wobei in dem durch die Ummantelung und der Mantelfläche des Mediumrohres begrenzten Zwischenraum ein Isolationsmedium, insbesondere PUR-Schaum, angeordnet sein kann. Hierdurch ergibt sich der Vorteil, dass auch an den Lagerpunkten des Innenrohrleitungsstranges, bei welchen zum Anbringen der halbringförmigen Stützelemente die umhüllenden Isolationsschichten entfernt werden müssen, Wärmebrücken vermieden werden und der Innenrohrleitungsstrang in axialer Richtung durchgehend mit einem isolierenden Material umhüllt ist. Die Ummantelung dient hierbei zum Schutz des Isolationsmediums vor mechanischer Beanspruchung und Feuchtigkeit.

Hierdurch werden insbesondere im Bereich der Verbindungsstelle der Innenrohrelemente oder im Bereich der Lagerung des Innenrohrleitungsstranges Wärmeverluste aufgrund der fehlenden Isolationsschicht vermieden, wobei das flüssige Isolationsmedium zur Nachisolierung auf einfache Weise durch eine in der Ummantelung angeordnete Ausnehmung hindurch in den Zwischenraum eingebracht werden kann.

Um in den durch die halbringförmigen Stützelemente unterteilten Zwischenraum zwischen der Ummantelung und dem Mediumrohr ein flüssiges Isolationsmedium einzubringen, weisen die halbringförmigen Stützelemente bevorzugt Durchbrüche zum Durchtritt des Isolationsmediums auf. Bei dem Isolationsmedium handelt es sich vorzugsweise um PUR-Schaum, wobei es jedoch auch denkbar ist, dass vor dem Anbringen der Ummantelung ein festes Isolationsmedium um das Mediumrohr herum angebracht wird.

Gemäß einer weiteren Ausführungsform der Erfindung erstrecken sich die halbringförmigen Stützelemente in Längsrichtung des Innenrohrleitungsstranges, wodurch die Auflagekräfte vom Mediumrohr in vorteilhafter Weise über eine vergrößerte Kontaktfläche abgetragen werden. Erfindungsgemäß können die halbringförmigen Stützelemente hierbei als Halbschalen ausgebildet sein, die das Mediumrohr unmittelbar umschließen.

Erfindungsgemäß bestehen die halbringförmigen Stützelemente aus einem Material mit hoher Druckfestigkeit und einem niedrigen Wärmeleitkoeffizienten, wodurch eine Wärmeübertragung über die halbringförmigen Stützelemente vermieden wird und die Lager von dem Mediumrohr thermisch getrennt sind. Wie die Anmelderin gefunden hat, hat sich die Verwendung von glasfaser- oder kohlefaserverstärktem Kunststoff als Material für die halbringförmigen Stützelemente als besonders vorteilhaft herausgestellt.

In einer weiteren vorteilhaften Ausführungsform der Erfindung kann zwischen den Lagern und den halbringförmigen Stützelementen wenigstens eine weitere Dichtung, insbesondere eine Trennschicht aus einem Material mit einem niedrigen Wärmeleitkoeffizienten, wie beispielsweise Klingerit, angeordnet sein, die eine Wärmeübertragung vom Mediumrohr über das halbringförmige Stützelement und über die Lager auf die Innenwand des Leitungsabschnitts in vorteilhafter Weise verhindert.

Für ein einfaches Verschieben und Verdrehen des Innenrohrleitungsstranges innerhalb des Leitungsabschnittes sind gemäß einer vorteilhaften Ausführungsform der Erfindung die Lager in einem Winkel von 90° am Umfang des Innenrohrleitungsstranges angeordnet und positionieren diesen vorzugsweise konzentrisch im Querschnitt des Leitungsabschnittes.

Erfindungsgemäß sind die Lager als Gleitkufen ausgebildet, die sich in Längsrichtung des Innenrohrleitungsstranges erstrecken. Um beim Einschieben des Innenrohrleitungsstranges in den Leitungsabschnitt sich im Inneren des Leitungsabschnitts befindliche Hindernisse, wie beispielsweise Schweißnahtversätze, leichter zu überwinden, weisen die Gleitkufen in vorteilhafter Weise an ihren Enden in Richtung des Innenrohrleitungsstranges geneigte Abwinklung auf. Gemäß einer anderen Ausführung der Erfindung können die Lager jedoch auch als Rollen- oder Walzenlager ausgebildet sein.

Zur Anpassung der Gleitkufen an den Innendurchmesser und die Oberflächenstruktur der Innenwand des zu sanierenden bzw. zu optimierenden Leitungsabschnitts sind die Gleitkufen in vorteilhafter Weise lösbar an dem zugeordneten halbringförmigen Stützelement befestigt, so dass diese auf einfache Weise gegen anders ausgestaltete Gleitkufen austauschbar sind.

In einer bevorzugten Ausführungsform der Erfindung umfassen die Lager Verbindungselemente mit daran angeordneten Gleitflächen, welche die Lagerkräfte von dem Mediumrohr über das halbringförmige Stützelement auf die Innenwand des zu sanierenden oder zu optimierenden Leitungsabschnitts übertragen. Zur Anpassung des von den Gleitflächen umschriebenen Außendurchmessers an den Innendurchmesser des zu sanierenden bzw. zu optimierenden Leitungsabschnittes ist die Länge der Verbindungselemente hierbei in radialer Richtung veränderbar. Hierdurch ergibt sich der Vorteil, dass die Vorrichtung an verschiedene Innendurchmesser von Fernwärmeleitungen angepasst werden kann. Vorzugsweise weist das halbringförmige Stützelement hierbei an den Außenseiten, insbesondere im Bereich der Ummantelung angeordnete Aufnahmen auf, in welche die Verbindungselemente einschraubbar bzw. einsteckbar sind.

Am Ende des Innenrohrleitungsstranges ist erfindungsgemäß eine Dichtung angeordnet, die den Innenrohrleitungsstrang gegenüber dem Leitungsabschnitt derart abdichtet, dass das Luftvolumen zwischen dem Innenrohrleitungsstrang und der Innenwand des Leitungsabschnitts im Wesentlichen abgeschlossen ist. Durch die Abdichtung der Enden des Innenrohrleitungsstranges gegenüber dem zu sanierenden bzw. zu optimierenden Leitungsabschnitt ergibt sich der Vorteil, dass die stehende Luftschicht zwischen der Innenwand des Leitungsabschnitts und dem Innenrohrleitungsstrang als zusätzliche Wärmedämmung dient.

Gemäß der Erfindung ist die Dichtung vorzugsweise als eine längenveränderliche Dichtung, insbesondere als Balgdichtung, ausgestaltet, welche eine Relativbewegung des Innenrohrleitungsstranges gegenüber dem Leitungsabschnitt erlaubt, so dass unterschiedliche Wärmedehnungen infolge unterschiedlicher Temperaturen des Innenrohrleitungsstranges und des zu sanierenden oder zu optimierenden Leitungsabschnitts oder einer Setzung der Auflager des zu sanierenden bzw. zu optimierenden Leitungsabschnittes nicht zu einer Schädigung der Dichtung führen. Die Dichtung ist hierbei mit ihrem einen Ende an der Außenseite des Leitungsabschnitts und mit ihrem anderen Ende mit der Außenseite des Innenrohrleitungsstranges, insbesondere mittels einer Schelle, befestigt, wobei jedoch auch eine Befestigung mit einem insbesondere mit Bolzen versehenen Klemmflansch, beispielsweise an der Innenwand des Leitungsabschnitts und am Mediumrohr, denkbar ist.

Die Dichtung besteht erfindungsgemäß vorzugsweise aus einem flexiblen Material, insbesondere aus Gummi, und ist erfindungsgemäß zwischen der Außenseite des Innenrohrleitungsstranges und der Dichtung mit einem Isolationselement zur thermischen Isolation versehen, so dass Wärmebrücken in vorteilhafter Weise einerseits an den Enden des Innenrohrleitungsstranges vermieden werden und andererseits die Dichtung vor zu hoher Temperaturbeanspruchung geschützt ist. Hierbei besteht das Isolationselement vorzugsweise aus Hartplastik oder aus Polyurethan.

Das Mediumrohr, welches vorzugsweise glattwandig ist und einen gleichbleibenden Querschnitt aufweist, besteht aufgrund von Heizwassertemperaturen von mehr als 100°C, insbesondere 130°C, erfindungsgemäß aus Stahl, vorzugsweise aus einem Stahl der normgemäßen Nenngüte St37. Hierdurch ergibt sich der Vorteil, dass das Mediumrohr einerseits gut schweißbar und hoch belastbar ist, andererseits aber auch einfach beschafft werden kann. Bei geringeren Temperaturen kann das Mediumrohr aber auch aus einem anderen vorzugsweise biegesteifen Material, insbesondere aus Kunststoff, gebildet sein.

Die Erfindung wird nachfolgend mit Bezug auf die Zeichnungen beschrieben.

In den Zeichnungen zeigen:
- Fig.1: einen Leistungsabschnitt mit einem erfindungsgemäßen Innenrohrleitungsstrang in einer räumlichen schematischen Seitenansicht,
- Fig.2: ein erfindungsgemäß sanierten bzw. optimierter Leitungsabschnitt im Endbereich mit einer Dichtung, die den Innenrohrleitungsstrang gegenüber dem Leitungsabschnitt abdichtet, in einer schematischen Seitenansicht,
- Fig.3: eine schematische Seitenansicht eines erfindungsgemäß sanierten bzw. optimierten Leitungsabschnittes mit als Halbschalen ausgestalteten halbringförmigen Stützelementen und daran angeordneten Lagern gemäß der bevorzugten Ausführungsform,
- Fig.4: eine schematische Seitenansicht eines erfindungsgemäß sanierten bzw. optimierten Leitungsabschnittes mit als Halbschalen gestalteten Stützelementen und daran angeordneten Lagern, wobei die Halbschalen im Verbindungsbereich der Innenrohrelemente einen verringerten Durchmesser aufweisen,
- Fig.5: eine Schnittdarstellung des Leitungsabschnittes von Fig.3,
- Fig.6: eine Schnittdarstellung des Leitungsabschnittes von Fig.4,
- Fig.7: eine schematische Seitenansicht eines erfindungsgemäß sanierten bzw. optimierten Leitungsabschnittes mit an halbringförmigen Stützelementen angeordneten Gleitkufen, einer die halbringförmigen Stützelemente umschließenden Ummantelung und mit Verbindungselementen, die lösbar mit den halbringförmigen Stützelementen verbunden sind,
- Fig.8: eine Schnittdarstellung des Leitungsabschnittes von Fig.7,
- Fig.9: eine Schnittdarstellung des Innenrohrleitungsstranges mit daran angeordneten halbringförmigen Stützelementen von Fig.7,
- Fig. 10: eine schematische Seitenansicht eines erfindungsgemäß sanierten bzw. optimierten Leitungsabschnittes mit als Halbschalen ausgestalteten halbringförmigen Stützelementen und daran angeordneten Gleitkufen, und
- Fig. 11: eine Schnittdarstellung des Leitungsabschnitts von Fig. 10.

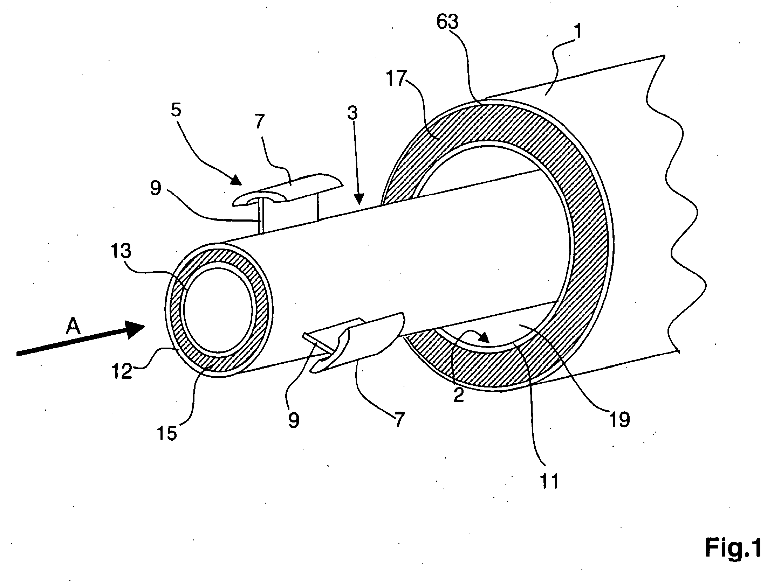

Wie in Fig.1 gezeigt ist, wird in einem bestehenden Leitungsabschnitt 1, welcher insbesondere aus einer Ummantelung 63 oder einem Mantelrohr, einem innenliegenden Mediumrohr 11 und einer dazwischen angeordnete Isolierschicht 17 besteht, ein Innenrohrleitungsstrang 3 durch Verschieben in Richtung des Pfeiles A eingebracht. Der Innenrohrleitungsstrang 3 besteht hierbei aus einzelnen nicht dargestellten Innenrohrelementen, die eine Schutzverkleidung 12, ein Mediumrohr 13 und eine dazwischen angeordnete Isolationsschicht 15 umfassen. Der Innenrohrleitungsstrang 3 wird hierbei durch Verbinden der Innenrohrelemente, insbesondere durch Verschweißen der Mediumrohre 13, hergestellt.

Um den Innenrohrleitungsstrang 3 herum sind an der Außenseite des Innenrohrleitungsstranges 3 in einem Winkel von vorzugsweise 120° drei Lager 5 angeordnet, die den Innenrohrleitungsstrang 3 konzentrisch im Leitungsabschnitt 1 positionieren. Die Lager 5 umfassen hierbei Gleitflächen 7, die den Innenrohrleitungsstrang 3 über Verbindungselemente 9 an der Innenwand 2 des zu sanierenden und/oder zu optimierenden Leitungsabschnitts 1 abstützen. Die Gleitflächen 7 ermöglichen hierbei in vorteilhafter Weise eine einfache Verschiebbarkeit des Innenrohrleitungsstranges 3 innerhalb des Leitungsabschnittes 1.

Weiterhin sind die Lager 5 in Längsrichtung des Innenrohrleitungsstranges 3 beabstandet angeordnet, wobei die Lager 5 vorzugsweise auf gleicher Höhe wie die schon bestehenden Lager - soweit vorhanden - des Leitungsabschnittes 1 liegen.

Das Material der Gleitflächen 7 weist in vorteilhafter Weise einen geringen Reibkoeffizienten auf, so dass für das Verschieben des Innenrohrleitungsstranges 3 in Richtung des Pfeiles A nur eine geringe Kraft aufzubringen ist und somit auch die Verbindungselemente 9 nur gering beansprucht werden. Darüber hinaus bestehen die Gleitflächen 7 und die Verbindungselemente 9 vorzugsweise aus einem Material mit einem niedrigen Wärmeleitkoeffizienten, so dass sich hierdurch der Vorteil ergibt, dass Wärmebrücken zwischen dem Innenrohrleitungsstrang 3 und der Innenwand 2 des Leitungsabschnittes 1 vermieden werden.

Da der Außendurchmesser des Innenrohrleitungsstranges 3 kleiner als der Innendurchmesser des Leitungsabschnittes 1 ist, befindet sich zwischen dem Innenrohrleitungsstrang 3 und der Innenwand 2 des Leitungsabschnittes 1 eine Luftschicht 19, die aufgrund des Abdichtens des Innenrohrleitungsstranges 3 gegenüber dem Leitungsabschnitt 1 im Wesentlichen stehend ist. Neben der Isolationsschicht 17 des Leitungsabschnittes 1 und der Isolationsschicht 15 des Innenrohrleitungsstranges 3 dient die im Wesentlichen stehende Luftschicht 19 dabei in vorteilhafter Weise als weitere thermische Isolation und verbessert somit zusätzlich die Wärmeisolationseigenschaften des Leitungsabschnittes 1.

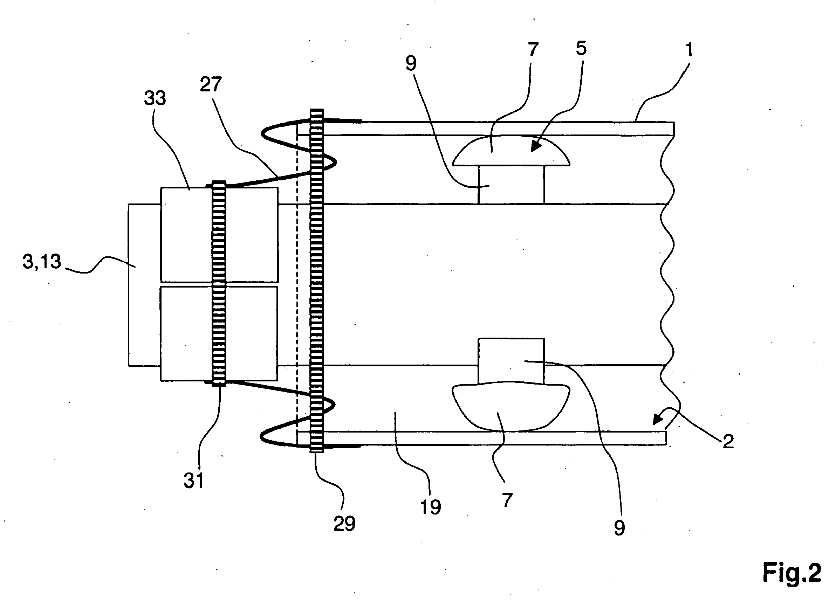

Wie der Darstellung in Fig.2 entnommen werden kann, ist zum Abdichten des Innenrohrleitungsstranges 3 gegenüber dem Leitungsabschnitt 1 eine insbesondere schlauchförmige Balgdichtung 27 vorgesehen, deren erstes Ende mittels einer ersten Schelle 29 an der Außenseite des Leitungsabschnittes 1 oder an dessen Mediumrohr 11 und deren zweites Ende mittels einer zweiten Schelle 31 am Innenrohrleitungsstrang 3 befestigt ist. Zur thermischen Isolation kann hierbei, insbesondere bei sehr hohen Temperaturen des Heizwassers, ein Isolationselement 33, insbesondere aus Kunststoff, zwischen der Außenseite des Innenrohrleitungsstranges 3 bzw. dem zugeordneten Mediumrohr 13 und der Dichtung 27 angeordnet sein, wobei die zweite Schelle 31 die Dichtung 27 auf das Isolationselement 33 presst.

Bei einer Leckage des Innenrohrleitungsstranges 3 verhindert die Balgdichtung 27 am Ende des Leitungsabschnittes 1 den ungehinderten Austritt des Heizwassers aus dem betreffenden Leitungsabschnitt 1 nach außen. Hierbei kann es ebenfalls vorgesehen sein, dass in die Balgdichtung 27 und/oder in dem Isolationselement 33 ein nicht dargestelltes Ventil und/oder ein Ablauf zum Abführen von sich bildendem Leck- oder Kondenswasser angeordnet ist.

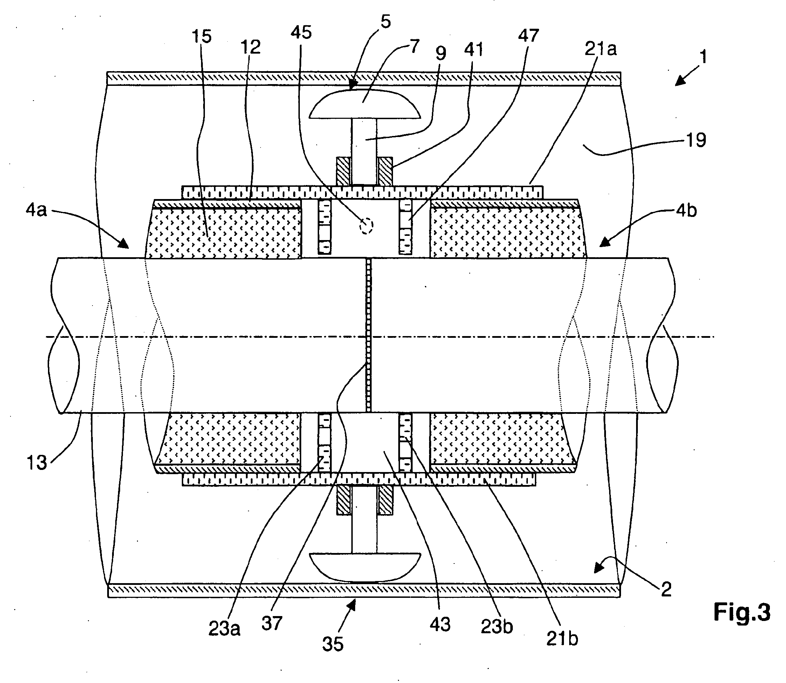

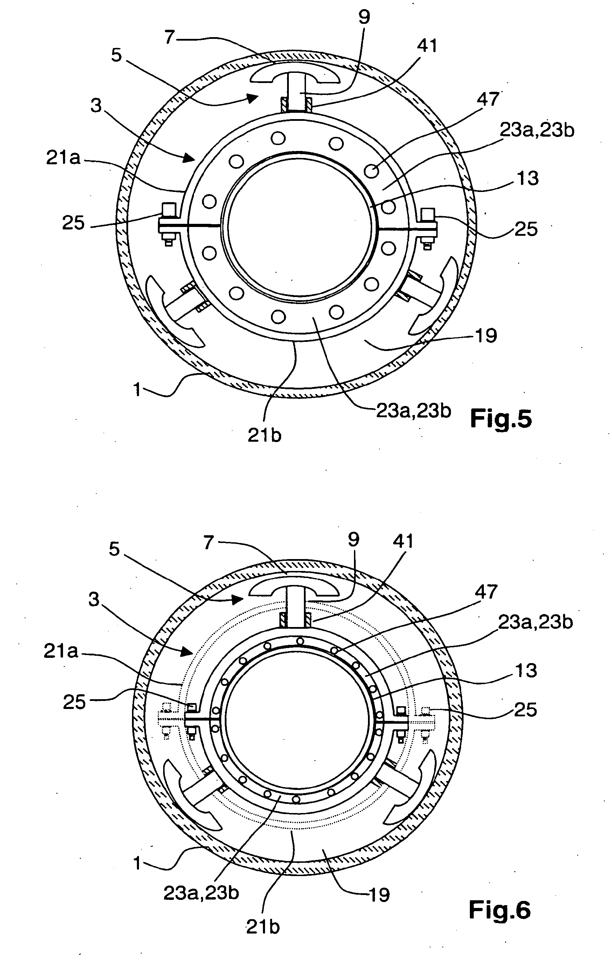

Eine erfindungsgemäße Vorrichtung zur Verbindung von Innenrohrelementen 4a, 4b und Lagerung des Innenrohrleitungsstranges 3, bei welcher der Stoßbereich 35 eines ersten und zweiten Innenrohrelementes 4a, 4b von einem ersten und zweiten halbringförmigen Stützelement vollständig umschlossen wird, ist in Fig.3 und Fig.5 gezeigt. Die halbringförmigen Stützelemente sind als eine erste und zweite Halbschale 21a, 21b ausgestaltet und über einen oder mehrere in Fig.3 nicht dargestellte Spannverschlüsse 25, insbesondere Bolzen oder Klammern, gegeneinander verspannt.

Die Mediumrohre 13 des ersten und zweiten Innenrohrelementes 4a, 4b sind im Stoßbereich über eine Schweißnaht 37 miteinander verbunden, wobei für eine einfache Herstellung der Schweißnaht 37 die Innenrohrelemente 4a, 4b im Stoßbereich von der Isolationsschicht 15 und deren äußere Schutzverkleidung 12 befreit sind. Hierdurch ergibt sich der Vorteil, dass bei der Herstellung der Schweißnaht 37 diese nicht nur leicht zugänglich ist, sondern auch die Isolationsschicht 15 und deren äußere Schutzverkleidung 12 nicht erst zeitaufwendig entfernt werden müssen. Die Halbschalen 21a, 21b, welche die Endbereiche des ersten und zweiten Innenrohrelementes 4a, 4b umschließen, erstrecken sich hierbei sowohl über die äußere Schutzverkleidung 12 des ersten Innenrohrelementes 4a als auch über die äußere Schutzverkleidung 12 des zweiten Innenrohrelementes 4b hinweg.

Auf der Innenseite umfassen die Halbschalen 21a, 21b Stützkörper 23a, 23b, die im Stoßbereich 35 zur unmittelbaren Auflagerung des Mediumrohres 13 des ersten und zweiten Innenrohrelementes 4a, 4b dienen. Um die teilweise ungleichmäßige Querschnittsform der Mediumrohre 13 oder des gesamten Innenrohrleitungsstranges 3, z.B. infolge exzentrischer Anordnung des Mediumrohres 13 in Bezug zur umgebenen Isolationsschicht 15 bzw. zur Schutzverkleidung 12, mit zu berücksichtigen, weisen die vorzugsweise halbringförmigen Querschnitte des ersten und zweiten Stützkörpers 23a, 23b einen Durchmesser auf, der geringfügig größer als der mittlere Außendurchmesser des Mediumrohres 13 ist. Der erste Stützkörper 23a dient hierbei als endseitige Lagerung des ersten vorzugsweise zwei-punkt-gelagerten Innenrohrelements 4a, währenddessen der zweite Stützkörper 23b zur endseitigen Lagerung dem zweiten vorzugsweise zwei-punkt-gelagerten Innenrohrelement 4b zugeordnet ist, wodurch die Isolationsschicht 15 und die Schutzverkleidung 12 keine Auflagerkräfte übertragen.

Die auf der Außenseite der Halbschale 21b, 21b angeordneten Lager 5 zur Abstützung der Halbschalen 21a, 21b an der Innenwand 2 des zu sanierenden bzw. zu optimierenden Leitungsabschnittes 1 weisen eine Gleitfläche 7 und ein Verbindungselement 9 auf, welches mit seinem einen Ende vorzugsweise in eine auf den Halbschalen 21a, 21b angeordnete Aufnahme 41 einschraubbar ist. Hierdurch kann der Außendurchmesser des durch die Lager 5 umschriebenen Kreises in vorteilhafter Weise dem Innendurchmesser des zu sanierenden bzw. zu optimierenden Leitungsabschnittes 1 angepasst werden, wobei zur Berücksichtigung der ungleichmäßigen Querschnittsform des Leitungsabschnittes 1 der Außendurchmesser des von den Lagern 5 umschriebenen Kreises geringfügig kleiner ist als der mittlere Innendurchmesser des Leitungsabschnittes 1.

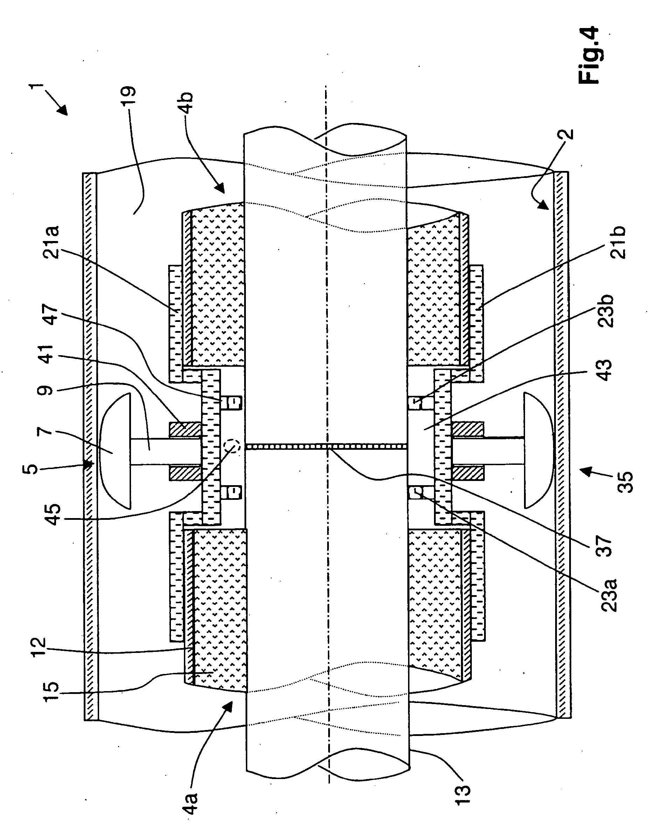

Um auch bei einem kleinen Durchmesserverhältnis von Außendurchmesser des Innenrohrleitungsstranges 3 und Innendurchmesser des Leitungsabschnittes 1 das erfindungsgemäße Verfahren anwenden zu können, weisen die als erste und zweite Halbschale 21a, 21b gestalteten halbringförmigen Stützelemente in einer weiteren Ausführungsform der Erfindung im Stoßbereich 35 einen Abstand verringerten Durchmessers auf. Wie Fig.4 und Fig.6 zeigen, sind hierbei die Mediumrohre 13 des ersten und zweiten Innenrohrelementes 4a, 4b im Stoßbereich 35 von der das Mediumrohr 13 umhüllenden Isolationsschicht 15 und äußeren Schutzverkleidung 12 befreit und über eine Schweißnaht 37 miteinander verbunden. Die Halbschalen 21a, 21b weisen im Bereich des Abstandes geringen Durchmessers auf der Innenseite Stützkörper 23a, 23b mit halbringförmigem Querschnitt zur unmittelbaren Lagerung der Mediumrohre 13 auf, wohingegen auf der Außenseite der Halbschalen 21a, 21b die Aufnahmen 41 angeordnet sind, in welche die Verbindungselemente 9 der Lager 5 einschraubbar sind. Der radiale Abstand der Gleitflächen 7 zur Längsachse des Mediumrohres 13 ist hierbei durch eine Längenänderung der Verbindungselemente 9 variabel, so dass die Vorrichtung in vorteilhafter Weise für eine Vielzahl unterschiedlich dimensionierter Leitungsabschnitte einsetzbar ist.

Um Wärmeverluste aufgrund der fehlenden Isolierung im Stoßbereich 35 der Innenrohrelemente 4a, 4b zu vermeiden, kann sowohl bei der Ausführungsform nach Fig.3 und Fig.5 als auch nach der in Fig.4 und Fig.6 gezeigten Ausführungsform der Zwischenraum 43 zwischen dem Mediumrohr 13 und den Halbschalen 21a, 21b mit einer Isolationsschicht ausgefüllt werden. Vorzugsweise wird hierzu ein Isolationsmedium, insbesondere PUR-Schaum, durch eine Öffnung 45 in den Zwischenraum 43 eingebracht, wobei die Stützkörper 23a, 23b für eine gleichmäßige Verteilung des PUR-Schaums im Zwischenraum 43 Durchbrüche 47 aufweisen.

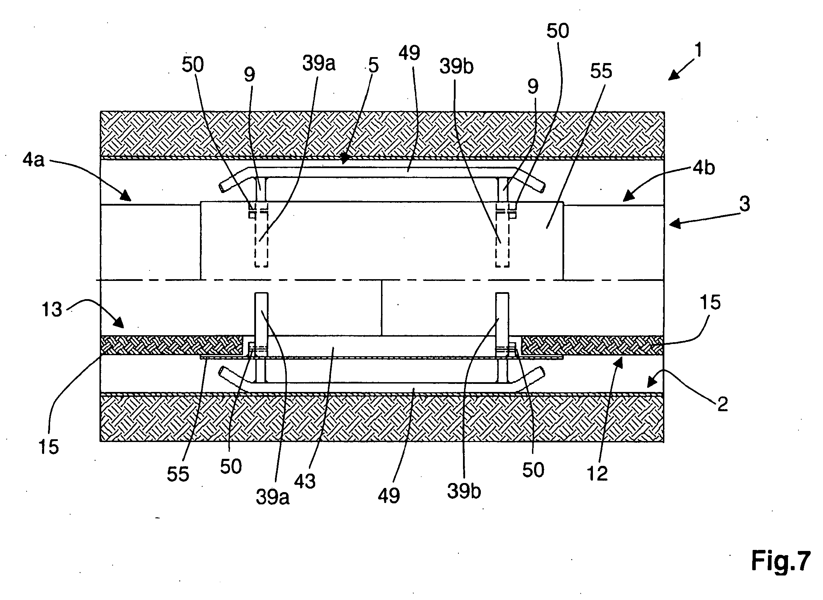

In Fig.7, Fig.8 und Fig.9 sind weitere Ausführungsformen der erfindungsgemäßen Vorrichtung 1 gezeigt, bei welchen die Lager 5 als vier sich in Längsrichtung des Innenrohrleitungsstranges 3 erstreckende Gleitkufen 49 ausgebildet sind, die über Verbindungselemente 9 mit den halbringförmigen Stützelementen 39a, 39b vorzugsweise lösbar verbunden sind. Für eine leichte Überwindbarkeit von sich im Leitungsabschnitt 1 befindlichen Hindernissen, wie beispielsweise in Fig.7 nicht dargestellten Schweißnähten, beim Einschieben des Innenrohrleitungsstranges 3, sind die Gleitkufen 49 an ihren Enden abgewinkelt.

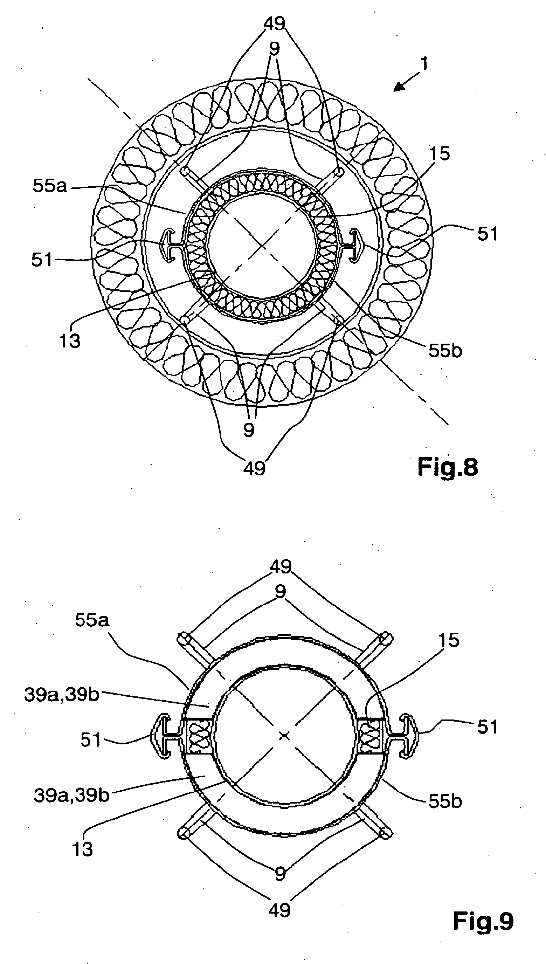

Die in Fig.7 und Fig.9 gezeigten halbringförmigen Stützelemente 39a, 39b, die vorzugsweise aus GFK bestehen, umgreifen hierbei das Mediumrohr 13 abschnittsweise und übertragen dessen Auflagerkräfte über die Verbindungselemente 9 und Gleitkufen 49 direkt auf die Innenwand 2 des Leitungsabschnitts 1. Für eine einfache Montage der halbringförmigen Stützelemente 39a, 39b sind die Enden der Innenrohrelemente 4a, 4b von der das Mediumrohr 13 umhüllenden Isolationsschicht 15 und der in Fig.7 nicht dargestellten Schutzverkleidung befreit, wobei dieser Bereich der Innenrohrelemente 4a, 4b einschließlich der halbringförmigen Stützelemente 39a, 39b von einer schalenförmigen Ummantelung 55 umschlossen wird. Die Ummantelung 55 erstreckt sich hierbei von der Isolationsschicht 15 des ersten Innenrohrelementes 4a zur Isolationsschicht 15 des zweiten Innenrohrelementes 4b und ist vorzugsweise mit dessen in den Fig.7 bis Fig.9 nicht dargestellten Schutzverkleidungen verklebt. Auf diese Weise wird von den äußeren Mantelflächen der Mediumrohre 13, den Isolationsschichten 15 und der Ummantelung 55 ein Zwischenraum 43 begrenzt, der nach der Montage der Ummantelung 55 mit einer in Fig.7 nicht dargestellten thermischen Isolierung ausgefüllt werden kann.

Auf der Innenseite der in Fig.7 gezeigten schalenförmigen Ummantelung 55 sind Anschlagelemente 50, insbesondere halbringförmige Leisten, angeordnet, an denen die halbringförmigen Stützelemente 39a, 39b insbesondere über eine Stiftverbindung lösbar befestigbar sind und die eine relative Verschiebung der Stützelemente 39a, 39b gegenüber der Ummantelung 55 verhindern.

Wie in Fig.8 und Fig.9 gezeigt ist, kann die schalenförmige Ummantelung 55 aus zwei halbschalenförmigen Einzelteilen 55a, 55b bestehen, die durch aus dem Stand der Technik bekannte Klammern 51 miteinander verbunden sind.

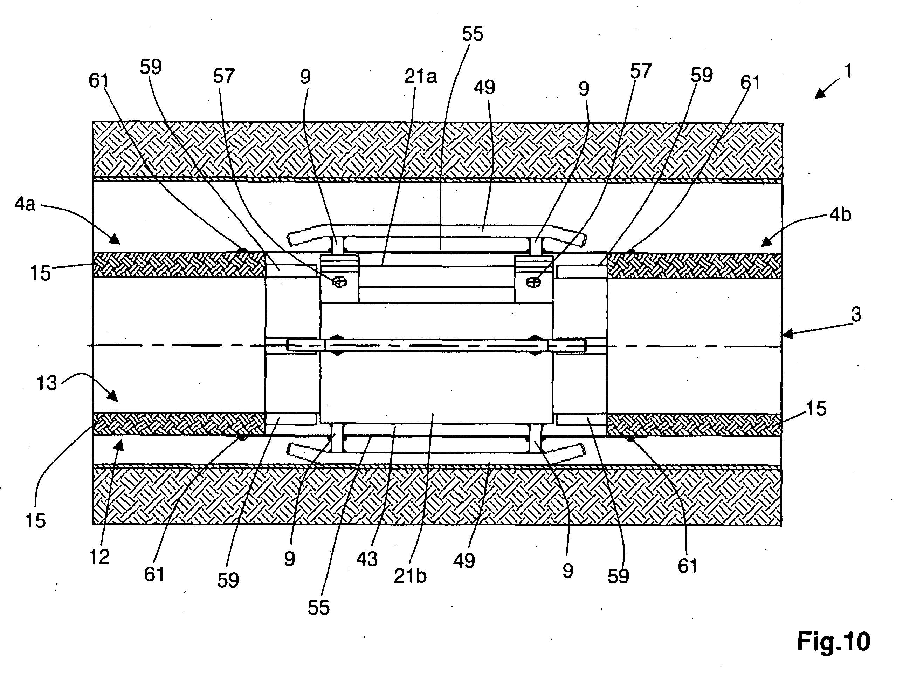

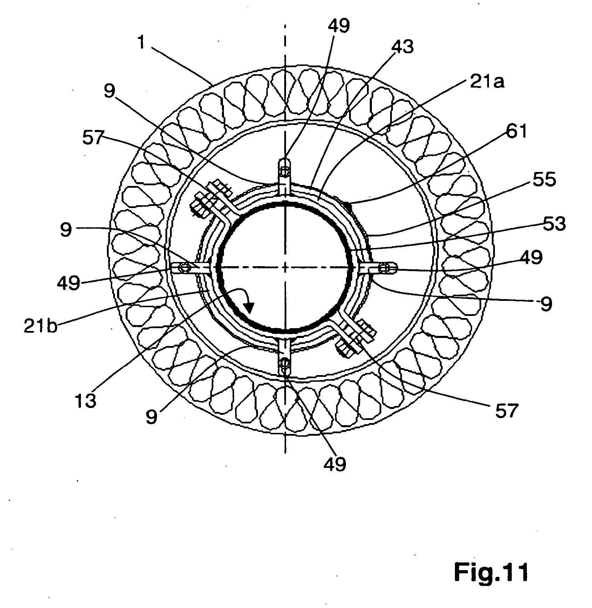

Die in Fig. 10 und Fig.11 dargestellte Ausführungsform der Erfindung zeigt zwei über Schrauben 57 miteinander verbundene halbringförmige Stützelemente, die als sich in Längsrichtung des Innenrohrleitungsstranges 3 erstreckende Halbschalen 21a, 21b ausgestaltet sind, wobei die Halbschalen 21a, 21b das Mediumrohr 13 des ersten und zweiten Innenrohrelementes 4a, 4b direkt umschließen. Um eine Wärmebrücke durch einen direkten Kontakt der Halbschalen 21a, 21b mit dem Mediumrohr 13 zu verhindern, kann es vorgesehen sein, dass zwischen dem Mediumrohr 13 und den Halbschalen 21a, 21b eine Zwischenschicht 53 aus einem Material mit einem niedrigen Wärmeleitkoeffizienten, insbesondere Klingerit, vorgesehen ist. In den Zwischenraum 43, der von den Halbschalen 21a, 21b bzw. den nicht isolierten Enden der Innenrohrelemente 4a,4b und einer äußeren Ummantelung 55 begrenzt wird, kann eine nicht dargestellte Isolationsschicht eingebracht werden. Die äußere Ummantelung 55 ist hierbei mit der Schutzverkleidung 12 der Isolationsschicht 15 der Innenrohrelemente 4a, 4b über eine wasserdichte Klebeverbindung 61, vorzugsweise mit einem dauerelastischen Kleber, verbunden. Zum Schutz der Isolationsschicht 15 vor einer Schädigung durch Feuchtigkeit, sind die Durchbrüche für die Verbindungselemente 9 in der äußeren Ummantelung 55 abgedichtet. Zur einfacheren Montage der äußeren Ummantelung 55, die wie die bereits in Fig.7 bis Fig.9 gezeigten Ummantelungen 55 vorzugsweise aus Blech besteht, das um den Innenrohrleitungsstrang 3 herumgeführt ist, werden die Gleitkufen 49 mit den Verbindungselementen 9 erst nach der Montage der äußeren Ummantelung 55 verbunden, vorzugsweise verschweißt.

Um beim Einschieben des Innenrohrleitungsstranges ein Verrutschen der Halbschalen 21a, 21b zu verhindern, sind in vorteilhafter Weise zu dem freien Ende der Innenrohrelemente 4a, 4b beabstandet angeordnete Abstandshalter 59 vorgesehen, welche vorzugsweise auf das Mediumrohr 13 geheftet sind. Die Abstandshalter 59 dienen hierbei als Anschlag für die Halbschalen 21a, 21b und verhindern somit eine Relativbewegung der Halbschalen 21a, 21b gegenüber dem jeweiligen Innenrohrelement 4a, 4b.

### Liste der Bezugszeichen

- 1: Leitungsabschnitt
- 2: Innenwand
- 3: Innenrohrleitungsstrang
- 4a: erstes Innenrohrelement
- 4b: zweites Innenrohrelement
- 5: Gleitlager
- 7: Gleitflächen
- 9: Verbindungselement
- 11: Mediumrohr des Leitungsabschnittes
- 12: Schutzverkleidung
- 13: Mediumrohr
- 15: Isolationsschicht
- 17: Isolationsschicht des Leitungsabschnittes
- 19: Luftschicht
- 21a: erste Halbschale
- 21b: zweite Halbschale
- 23a: erster Stützkörper
- 23b: zweiter Stützkörper
- 25: Spannverschluss
- 27: Dichtung
- 29: erste Schelle
- 31: zweite Schelle
- 33: Isolationselement

- 35: Stoßbereich
- 37: Schweißnaht
- 39a: erstes halbringförmiges Stützelement
- 39b: zweites halbringförmiges Stützelement
- 41: Aufnahme
- 43: Zwischenraum
- 45: Öffnung
- 47: Durchbruch
- 49: Gleitkufen
- 50: Anschlagelement
- 51: Klammer
- 53: Zwischenschicht
- 55: Ummantelung
- 55a: erste Ummantelung
- 55b: zweite Ummantelung
- 57: Schrauben
- 59: Abstandshalter
- 61: Klebeverbindung
- 62: Ummantelung des Leitungsabschnittes

## Patentansprüche

1. Verfahren zur Sanierung oder zur Optimierung der Effizienz eines bestehenden Fernwärmeleitungssystems, wobei das Fernwärmeleitungssystem wenigstens einen geöffneten Leitungsabschnitt (1) aufweist,
**gekennzeichnet durch** folgende Verfahrensschritte,
- Einbringen eines **durch** Verbinden von ein Mediumrohr umfassenden, thermisch isolierten eigensteifen Innenrohrelementen (4a, 4b) kleineren Durchmessers mit daran angeordneten Lagern (5) erzeugten Innenrohrleitungsstranges (3) in den Leitungsabschnitt (1), und
- Abdichten der Enden des Innenrohrleitungsstrangs (3) gegenüber dem Leitungsabschnitt (1) mittels einer Dichtung (27) derart, dass das Luftvolumen (19) zwischen dem Innenrohrleitungsstrang (3) und der Innenwand (2) des Leitungsabschnittes (1) im Wesentlichen abgeschlossen ist.

2. Verfahren nach Anspruch 1,
**dadurch gekennzeichnet,**
**dass** die Innenrohrelemente (4a, 4b) im Taktverfahren nacheinander in den eröffneten Leitungsabschnitt (1) eingebracht werden, wobei die Innenrohrelemente (4a, 4b) insbesondere durch Verschweißen miteinander verbunden und mittels der Lager (5) in den Leitungsabschnitt (1) eingeschoben werden.

3. Verfahren nach einem Ansprüche 1 oder 2,
**dadurch gekennzeichnet,**
**dass** der Innenrohrleitungsstrang (3) über eine Länge im Bereich von 100 bis 200 m in den Leitungsabschnitt (1) eingeschoben wird.

4. Verfahren nach einem der vorhergehenden Ansprüche,
**dadurch gekennzeichnet,**
**dass** die Dichtung (27) eine längenveränderliche Dichtung ist, welche eine Relativbewegung des Innenrohrleitungsstranges (3) gegenüber dem Leitungsabschnitt (1) erlaubt.

5. Verfahren nach einem der vorhergehenden Ansprüche,
**dadurch gekennzeichnet,**
**dass** am Ende des Leitungsabschnittes (1), insbesondere in der Dichtung (27), ein Ventil und/oder ein Ablauf zum Abführen von sich bildendem Leck- oder Kondenswasser angeordnet ist.

6. Verfahren nach einem der vorhergehenden Ansprüche,
**dadurch gekennzeichnet,**
**dass** das Eröffnen des Leitungsabschnittes (1) in einem Stufenbereich oder in einem U-förmigen Dehnungsbereich des Fernwärmeleitungssystems erfolgt.

7. Innenrohrleitungsstrang (3) mit wenigstens einem ein Mediumrohr (13) und eine Isolationsschicht (15) umfassenden ersten und zweiten eigensteifen Innenrohrelement (4a, 4b) und an der Außenseite angeordneten Lagern (5) zur Abstützung des Innenrohrleitungsstranges (3) an der Innenwand (2) eines zu sanierenden oder zu optimierenden Leitungsabschnitts (1) zur Durchführung des Verfahrens nach einem der vorhergehenden Ansprüche,
**dadurch gekennzeichnet,**
**dass** der Innenrohrleitungsstrang (3) ein erstes und zweites halbringförmiges Stützelement (21a,21b,39a,39b) umfasst, die das Mediumrohr (13) zumindest abschnittsweise umgreifen, wobei die Lager (5) an der Außenseite der halbringförmigen Stützelemente (21a,21b,39a,39b) befestigbar sind und sich das Mediumrohr (13) unmittelbar an den halbringförmigen Stützelementen (21a,21b,39a,39b) abstützt, und dass am Ende des Innenrohrleitungsstranges (3) eine längenveränderliche Dichtung (27), insbesondere eine Balgdichtung angeordnet ist, die den Innenrohrleitungsstrang (3) gegenüber dem Leitungsabschnitt (1) derart abdichtet, dass das Luftvolumen zwischen dem Innenrohrleitungsstrang (3) und der Innenwand (2) des Leitungsabschnitts (1) im Wesentlichen abgeschlossen ist.

8. Innenrohrleitungsstrang nach Anspruch 7,
**dadurch gekennzeichnet,**
**dass** die halbringförmigen Stützelemente (21a,21b,39a,39b) einen Innendurchmesser aufweisen, der geringfügig größer als der Außendurchmesser der Mediumrohre (13) ist.

9. Innenrohrleitungsstrang nach einem der Ansprüche 7 oder 8,
**dadurch gekennzeichnet,**
**dass** eine um den Außenumfang des Innenrohrleitungsstranges (3) sich erstreckende Ummantelung (55,55a,55b) die halbringförmigen Stützelemente (21a,21b,39a,39b) vollständig und die Isolationsschicht (15) der Innenrohrelemente (4a,4b) abschnittsweise umschließt, wobei in den durch das Mediumrohr (13) und die Ummantelung (55,55a,55b) begrenzten Zwischenraum (43) ein Isolationsmedium, insbesondere PUR-Schaum, einbringbar ist.

10. Innenrohrleitungsstrang nach Anspruch 9,
**dadurch gekennzeichnet,**
**dass** in den halbringförmigen Stützelementen (39a, 39b) Durchbrüche (47) zum Durchtritt des Isolationsmediums gebildet sind.

11. Innenrohrleitungsstrang nach einem der Ansprüche 7 bis 10,
**dadurch gekennzeichnet,**
**dass** sich die halbringförmige Stützelemente (39a, 39b, 21a, 21b) in Längsrichtung des Innenrohrleitungsstranges (3) erstrecken.

12. Innenrohrleitungsstrang nach Anspruch 11,
**dadurch gekennzeichnet,**
**dass** die halbringförmigen Stützelemente (39a, 39b) als Halbschalen (21a, 21b) ausgebildet sind.

13. Innenrohrleitungsstrang nach einem der Ansprüche 7 bis 12,
**dadurch gekennzeichnet,**
**dass** die halbringförmigen Stützelemente (21a,21b,39a,39b) aus einem Material mit hoher Druckfestigkeit und einem niedrigen Wärmeleitkoeffizienten, insbesondere glasfaser- oder kohlefaserverstärktem Kunststoff, bestehen.

14. Innenrohrleitungsstrang nach einem der Ansprüche 7 bis 13,
**dadurch gekennzeichnet,**
**dass** zwischen den Lagern (5) und den halbringförmigen Stützelementen (21a,21b,39a,39b) wenigstens eine weitere Dichtung, insbesondere eine Trennschicht aus Klingerit, zur Herstellung einer thermischen Trennung zwischen dem Mediumrohr (13) und der Innenwand (2) des zu sanierenden oder optimierenden Leitungsabschnitts (1) angeordnet ist.

15. Innenrohrleitungsstrang nach einem der Ansprüche 7 bis 14,
**dadurch gekennzeichnet,**
**dass** die Lager (5) in einem Winkel von 90° am Umfang des Innenrohrleitungsstranges (3) angeordnet sind.

16. Innenrohrleitungsstrang nach einem der Ansprüche 7 oder 15,
**dadurch gekennzeichnet,**
**dass** die Lager (5) als sich in Längsrichtung des Innenrohrleitungsstranges (3) erstreckende Gleitkufen (49) ausgebildet sind.

17. Innenrohrleitungsstrang nach Anspruch 16,
**dadurch gekennzeichnet,**
**dass** die Gleitkufen (49) lösbar an den halbringförmigen Stützelementen (21a,21b,39a,39b) befestigbar sind.

18. Innenrohrleitungsstrang nach einem der Ansprüche 7 bis 17,
**dadurch gekennzeichnet,**
**dass** die Lager (5) Verbindungselemente (9) umfassen, deren Länge in radialer Richtung relativ zu den halbringförmigen Stützelementen (21a,21b,39a,39b) zur Anpassung des Außendurchmesser der Lager (5) an den Innendurchmesser des Leitungsabschnittes (1) veränderbar ist.

19. Innenrohrleitungsstrang nach Anspruch 18,
**dadurch gekennzeichnet,**
**dass** die halbringförmigen Stützelemente (21a,21b,39a,39b) Aufnahmen (41) aufweisen, in die die Verbindungselemente (9) einschraubbar sind.

20. Innenrohrleitungsstrang nach einem der Ansprüche 7 bis 19,
**dadurch gekennzeichnet,**
**dass** die Dichtung (27) mit ihrem einen Ende an der Außenseite des Leitungsabschnitts (1) und mit ihrem anderen Ende mit der Außenseite des Innenrohrleitungsstrangs (3), insbesondere mittels Schellen (29, 31) oder einem Klemmflansch verbunden ist.

21. Innenrohrleitungsstrang nach Anspruch 20,
**dadurch gekennzeichnet,**
**dass** zwischen der Außenseite des Innenrohrleitungsstranges (3) und der Dichtung (27) ein Isolationselement (33) zur thermischen Isolation angeordnet ist.

## Claims

1. Method for renovating or optimising the efficiency of an existing district heating system, the district heating system comprising at least one open distribution portion (1), **characterised by** the following method steps:
- introducing into the distribution portion (1) an inner pipeline (3), produced by connecting thermally insulated, inherently rigid inner pipe elements (4a, 4b) of small diameter, and comprising a medium pipe, with mountings (5) arranged thereon, and
- sealing the ends of the inner pipeline (3) from the distribution portion (1) by means of a seal (27), in such a way that the volume of air (19) between the inner pipeline (3) and the internal wall (2) of the distribution portion (1) is substantially closed off.

2. Method according to claim 1, **characterised in that** the inner pipe elements (4a, 4b) are introduced into the open distribution portion (1) intermittently in succession, the inner pipe elements (4a, 4b) being connected to one another in particular by welding and inserted into the distribution portion (1) by means of the mountings (5).

3. Method according to either claim 1 or claim 2, **characterised in that** the inner pipeline (3) is inserted into the distribution portion (1) by a length in the range of from 100 to 200 m.

4. Method according to any one of the preceding claims, **characterised in that** the seal (27) is an adjustable-length seal, which allows the inner pipeline (3) to move relative to the distribution portion (1).

5. Method according to any one of the preceding claims, **characterised in that** a valve and/or an outlet for carrying off any leaked or condensed water which may form is arranged at the end of the distribution portion (1), in particular in the seal (27).

6. Method according to any one of the preceding claims, **characterised in that** the distribution portion (1) opens in a step region or in a U-shaped expansion region of the district heating system.

7. Inner pipeline (3) with at least one first and second inherently rigid inner pipe element (4a, 4b), which comprises a medium pipe (13) and an insulation layer (15), and with mountings (5) arranged on the outside for supporting the inner pipeline (3) on the inner wall (2) of a distribution portion (1) which is to be renovated or optimised, for carrying out the method according to any one of the preceding claims, **characterised in that** the inner pipeline (3) comprises a first and a second semiannular support element (21a, 21b, 39a, 39b), which surround the medium pipe (13) at least in some regions, the mountings (5) being able to be fastened to the outside of the semiannular support elements (21a, 21b, 39a, 39b) and the medium pipe (13) abutting directly on the semiannular support elements (21a, 21b, 39a, 39b), and **in that** an adjustable-length seal (27), in particular a bellows-type seal, is arranged on the end of the inner pipeline (3) and seals the inner pipeline (3) from the distribution portion (1) in such a way that the volume of air between the inner pipeline (3) and the internal wall (2) of the distribution portion (1) is substantially closed off.

8. Inner pipeline according to claim 7, **characterised in that** the semiannular support elements (21a, 21b, 39a, 39b) have an inner diameter which is slightly greater than the outer diameter of the medium pipe (13).

9. Inner pipeline according to either claim 7 or claim 8, **characterised in that** a cladding (55, 55a, 55b) extending round the outer circumference of the inner pipeline (3) encloses the semiannular support elements (21a, 21b, 39a, 39b) completely and the insulation layer (15) of the inner pipe elements (4a, 4b) in some regions, it being possible to introduce an insulation medium, in particular polyurethane foam, into the intermediate space (43) delimited by the medium pipe (13) and the clad (55, 55a, 55b).

10. Inner pipeline according to claim 9, **characterised in that** breaks (47) for the insulation medium to pass through are formed in the semiannular support elements (39a, 39b).

11. Inner pipeline according to any one of claims 7 to 10, **characterised in that** the semiannular support elements (39a, 39b, 21a, 21b) extend in the longitudinal direction of the inner pipeline (3).

12. Inner pipeline according to claim 11, **characterised in that** the semiannular support elements (39a, 39b) are formed as half-shells (21a, 21b).

13. Inner pipeline according to any one of claims 7 to 12, **characterised in that** the semiannular support elements (21a, 21b, 39a, 39b) consist of a material with a high compressive strength and a low coefficient of thermal conduction, in particular plastics material reinforced with glass fibres or carbon fibres.

14. Inner pipeline according to any one of claims 7 to 13, **characterised in that** at least one further seal, in particular a Klingerit separation layer, for producing a thermal separation between the medium pipe (13) and the inner wall (2) of the distribution portion (1) to be repaired or optimised is arranged between the mountings (5) and the semiannular support elements (21a, 21b, 39a, 39b).

15. Inner pipeline according to any one of claims 7 to 14, **characterised in that** the mountings (5) are arranged at an angle of 90° on the circumference of the inner pipeline (3).

16. Inner pipeline according to either claim 7 or claim 15, **characterised in that** the mountings (5) are formed as runners (49) extending in the longitudinal direction of the inner pipeline (3).

17. Inner pipeline according to claim 16, **characterised in that** the runners (49) are releasably attachable to the semiannular support elements (21a, 21b, 39a, 39b).

18. Inner pipeline according to any one of claims 7 to 17, **characterised in that** the mountings (5) comprise connection elements (9), of which the length in the radial direction is adjustable relative to the semiannular support elements (21a, 21b, 39a, 39b) to fit the outer diameter of the mountings (5) to the inner diameter of the distribution portion (1).

19. Inner pipeline according to claim 18, **characterised in that** the semiannular support elements (21a, 21b, 39a, 39b) comprise recesses (41) into which the connection elements (9) can be screwed.

20. Inner pipeline according to any one of claims 7 to 19, **characterised in that** one end of the seal (27) is connected to the outside of the distribution portion (1) and the other end is connected to the outside of the inner pipeline (3), in particular by means of clamps (29, 31) or a clamping flange.

21. Inner pipeline according to claim 20, **characterised in that** an insulation element (33) for thermal insulation is arranged between the outside of the inner pipeline (3) and the seal (27).

## Revendications

1. Procédé pour la rénovation ou l'optimisation de l'efficacité d'un système de distribution de chaleur existant, le système de distribution de chaleur présentant au moins une partie de conduite (1) ouverte, **caractérisé par** les étapes de procédé suivantes :
- introduction d'un faisceau de conduite intérieure (3), généré par la liaison d'éléments de tuyau intérieur (4a, 4b) comprenant un tuyau à milieu, isolé thermiquement et autorigide, de diamètre plus petit avec des paliers (5) disposés dessus, dans la partie de conduite (1) et
- étanchéité des extrémités du faisceau de conduite intérieure (3) par rapport à la partie de conduite (1) au moyen d'un joint (27) de telle sorte que le volume d'air (19) entre le faisceau de conduite intérieure (3) et la paroi intérieure (2) de la partie de conduite (1) est essentiellement fermé.

2. Procédé selon la revendication 1,
**caractérisé en ce que**
les éléments de tuyau intérieur (4a, 4b) sont introduits dans la partie de conduite (1) ouverte, successivement par un procédé de synchronisation, les éléments de tuyau intérieur (4a, 4b) étant reliés les uns aux autres en particulier par soudage et étant introduits au moyen des paliers (5) dans la partie de conduite (1).

3. Procédé selon la revendication 1 ou 2
**caractérisé en ce que**
le faisceau de conduite intérieure (3) est introduit sur une longueur de 100 à 200 m dans la partie de conduite (1).

4. Procédé selon l'une quelconque des revendications précédentes,
**caractérisé en ce que**
le joint (27) est un joint variable en longueur, qui permet un déplacement relatif du faisceau de conduite intérieure (3) par rapport à la partie de conduite (1).

5. Procédé selon l'une quelconque des revendications précédentes,
**caractérisé en ce que**
sur l'extrémité de la partie de conduite (1), en particulier dans le joint (27), est disposée une vanne et/ou un écoulement pour l'évacuation d'eau de fuite ou d'eau de condensation qui se forme.

6. Dispositif selon l'une quelconque des revendications précédentes,
**caractérisé en ce que**
l'ouverture de la partie de conduite (1) s'effectue dans une zone étagée ou dans une zone de dilatation en U du système de distribution de chaleur.

7. Faisceau de conduite intérieure (3) comprenant au moins un premier et un second éléments de tuyau intérieur (4a, 4b) autorigides, comportant un tuyau à milieu (13) et une couche d'isolation (15) et des paliers (5) disposés sur le côté extérieur pour le soutien du faisceau de conduite intérieure (3) sur la paroi intérieure (2) d'une partie de conduite (1) à rénover ou à optimiser pour la mise en oeuvre du procédé selon l'une quelconque des revendications précédentes,
**caractérisé en ce que**
le faisceau de conduite intérieure (3) comprend un premier et un second éléments de soutien (21 a, 21 b, 39a, 39b) en forme de demi-bague, qui entoure au moins par endroits le tuyau à milieu (13), les paliers (5) pouvant être fixés sur le côté extérieur des éléments de soutien (21 a, 21 b, 39a, 39b) en forme de demi-bague et le tuyau à milieu (13) s'appuyant directement sur les éléments de soutien (21a, 21b, 39a, 39b) en forme de demi-bague, et **en ce que** sur l'extrémité du faisceau de conduite intérieure (3) est disposé un joint (27) variable en longueur, en particulier un joint à soufflet, qui étanchéifie le faisceau de conduite intérieure (3) par rapport à la partie de conduite (1) de telle sorte que le volume d'air entre le faisceau de conduite intérieure (3) et la paroi intérieure (2) de la partie de conduite (1) est essentiellement fermé.

8. Faisceau de conduite intérieure selon la revendication 7,
**caractérisé en ce que**
les éléments de soutien (21a, 21b, 39a, 39b) en forme de demi-bague présentent un diamètre intérieur qui est légèrement supérieur au diamètre extérieur des tuyaux à milieu (13).

9. Faisceau de conduite intérieure selon l'une quelconque des revendications 7 ou 8,
**caractérisé en ce que**
une enveloppe (55, 55a, 55b) s'étendant sur le pourtour extérieur du faisceau de conduite intérieure (3) entoure complètement les éléments de soutien (21 a, 21b, 39a, 39b) en forme de demi-bague et par endroits la couche d'isolation (15) des éléments de tuyau intérieur (4a, 4b), un agent d'isolation, en particulier de la mousse de polyuréthane, pouvant être introduit dans l'espace intermédiaire (43) délimité par le tuyau à milieu (13) et l'enveloppe (55, 55a, 55b).

10. Faisceau de conduite intérieure selon la revendication 9,
**caractérisé en ce que**
des percements (47) pour le passage de l'agent d'isolation sont formés dans les éléments de soutien (39a, 39b) en forme de demi-bague.

11. Faisceau de conduite intérieure selon l'une quelconque des revendications 7 à 10,
**caractérisé en ce que**
les éléments de soutien (39a, 39b, 21a, 21b) en forme de demi-bague s'étendent dans le sens longitudinal du faisceau de conduite intérieure (3).

12. Faisceau de conduite intérieure selon la revendication 11,
**caractérisé en ce que**
les éléments de soutien (39a, 39b) en forme de demi-bague sont conçus sous forme de demi-coques (21 a, 21 b).

13. Faisceau de conduite intérieure selon l'une quelconque des revendications 7 à 12,
**caractérisé en ce que**
les éléments de soutien (21a, 21b, 39a, 39b) en forme de demi-bague sont à base d'un matériau présentant une résistance à la pression élevée et un faible coefficient de conduction thermique, en particulier un plastique renforcé de fibre de verre ou de fibre de carbone.

14. Faisceau de conduite intérieure selon l'une quelconque des revendications 7 à 13,
**caractérisé en ce que**
entre les paliers (5) et les éléments de soutien (21 a, 21b. 39a, 39b) en forme de demi-bague est disposé au moins un autre joint, en particulier une couche de séparation à base de klingérite, pour la fabrication d'une séparation thermique entre le tuyau à milieu (13) et la paroi intérieure (2) de la partie de conduite (1) à rénover ou à optimiser.

15. Faisceau de conduite intérieure selon l'une quelconque des revendications 7 à 14,
**caractérisé en ce que**
les paliers (5) sont disposés dans un angle de 90° sur le pourtour du faisceau de conduite intérieure (3).

16. Faisceau de conduite intérieure selon l'une quelconque des revendications 7 ou 15,
**caractérisé en ce que**
les paliers (5) sont conçus sous forme de patins à glissement (49) s'étendant dans le sens longitudinal du faisceau de conduite intérieure (3).

17. Faisceau de conduite intérieure selon la revendication 16,
**caractérisé en ce que**
les patins à glissement (49) peuvent être fixés de manière amovible sur les éléments de soutien (21 a, 21 b, 39a, 39b) en forme de demi-bague.

18. Faisceau de conduite intérieure selon l'une quelconque des revendications 7 à 17,
**caractérisé en ce que**
les paliers (5) comprennent des éléments de liaison (9) dont la longueur est variable dans le sens radial par rapport aux éléments de soutien (21 a, 21 b, 39a, 39b) en forme de demi-bague pour l'adaptation du diamètre extérieur des paliers (5) au diamètre intérieur de la partie de conduite (1).

19. Faisceau de conduite intérieure selon la revendication 18,
**caractérisé en ce que**
les éléments de soutien (21a, 21b, 39a, 39b) en forme de demi-bague présentent des logements (41) dans lesquels les éléments de liaison (9) peuvent être vissés.

20. Faisceau de conduite intérieure selon l'une quelconque des revendications 7 à 19,
**caractérisé en ce que**
le joint (27) est relié par l'une des extrémités sur le côté extérieur de la partie de conduite (1) et par son autre extrémité au côté extérieur du faisceau de conduite intérieure (3), en particulier au moyen de colliers (29, 31) ou d'une bride de serrage.

21. Faisceau de conduite intérieure selon la revendication 20,
**caractérisé en ce que**
un élément d'isolation (33) pour l'isolation thermique est disposé entre le côté extérieur du faisceau de conduite intérieure (3) et le joint (27).
